# EUROPÄISCHE PATENTANMELDUNG

(11) **EP 4 008 466 A1**
(43) Veröffentlichungstag der Anmeldung: **08.06.2022**
(21) Anmeldenummer: 20211901.2
(22) Anmeldetag: 04.12.2020
(51) Int. Cl.: B23D 45/16, B23D 47/00, B25F 5/02, B24B 55/05

(54) **WERKZEUGMASCHINE MIT EINEM SCHEIBENFÖRMIGEN WERKZEUG UND EINEM SCHUTZBLECH ZUM SCHUTZ VOR FUNKENFLUG**

(71) Anmelder: Hilti Aktiengesellschaft, 9494 Schaan (LI)
(72) Erfinder: Holzmeier, Georg, 86748 Marktoffingen (DE); Meuer, Roland, 86833 Ettringen (DE)
(74) Vertreter: Hilti Aktiengesellschaft Corporate Intellectual Property

(57) **Zusammenfassung**

Die vorliegende Erfindung betrifft eine Werkzeugmaschine mit einem scheibenförmigen Werkzeug und einem Schutzblech, um die Werkzeugmaschine vor einem Funkenflug zu schützen. Dabei weist das Schutzblech Vorrichtungen zur Unterstützung eines sicheren Stands der Werkzeugmaschine auf, wobei die Vorrichtungen ein elastisches Material umfassen und an Laschen des Schutzbleches vormontierbar sind. In weiteren Aspekten betrifft die Erfindung eine Baugruppe und ein Verfahren zur schnellen Montage eines Schutzbleches und von Vorrichtungen zur Unterstützung eines sicheren Stands einer Werkzeugmaschine an eine Werkzeugmaschine.

## Beschreibung

Die vorliegende Erfindung betrifft eine Werkzeugmaschine mit einem scheibenförmigen Werkzeug und einem Schutzblech, um die Werkzeugmaschine vor einem Funkenflug zu schützen. Dabei weist das Schutzblech Vorrichtungen zur Unterstützung eines sicheren Stands der Werkzeugmaschine auf, wobei die Vorrichtungen ein elastisches Material umfassen und an Laschen des Schutzbleches vormontierbar sind. In weiteren Aspekten betrifft die Erfindung eine Baugruppe und ein Verfahren zur schnellen Montage eines Schutzbleches und von Vorrichtungen zur Unterstützung eines sicheren Stands einer Werkzeugmaschine an eine Werkzeugmaschine.

### Hintergrund der Erfindung:

Im Bereich der Werkzeugmaschine sind Trennschleifer bekannt, mit denen beispielsweise auch Schnitte in harten Untergründen, wie Stahl, eingebracht werden können. Trennschleifer, die auch für das Schneiden von Stahl vorgesehen sind, benötigen oftmals einen besonderen Schutz gegen den Funkenflug, der beim Stahlschneiden entsteht. Hierfür wird ein Schutzblech am Trennschleifer angebracht, welches verhindern soll, dass die Funken empfindliche oder brennbare Teile der Werkzeugmaschine oder seines Gehäuses beschädigen. Außerdem werden bei einigen Trennschleifern auch Standfüße montiert, um einen guten und rutschfesten Stand der Geräte zwischen den Arbeitseinsätzen zu gewährleisten. Um diese Standfüße am Gerät zu befestigen, sind meist neben den Schrauben auch Unterlegscheiben oder Ähnliches notwendig, um die Auflagekräfte der Schrauben auf eine größere Fläche am Standfuß zu verteilen, da dieser sonst nicht ausreichend befestigt wird. Außerdem ist diese größere Auflagefläche des Befestigungselements notwendig, um zu verhindern, dass im Betrieb durch die Vibrationen das Material des Standfußes beschädigt wird, beispielsweise durch Rissbildung oder dergleichen.

Die Aufgabe, die der vorliegenden Erfindung zugrunde liegt, besteht darin, die vorstehend beschriebenen Mängel und Nachteile des Standes der Technik zu überwinden und eine Werkzeugmaschine bereitzustellen, die aufgrund einer großen Auflagefläche einen sicheren und stabilen Stand der Werkzeugmaschine ermöglichen. Darüber hinaus soll die bereitzustellende Lösung robust und widerstandsfähig sein, insbesondere was das zu verwendende Material betrifft. Ferner soll die bereitzustellende Lösung einfach und unkompliziert an der Werkzeugmaschine montiert werden können, wobei insbesondere eine Reduzierung von Teilen, wie Schrauben und Unterlegscheiben, wünschenswert wäre.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine vorgesehen mit einem scheibenförmigen Werkzeug und einem Schutzblech, um die Werkzeugmaschine vor einem Funkenflug zu schützen. Die Werkzeugmaschine ist dadurch gekennzeichnet, dass das Schutzblech Vorrichtungen zur Unterstützung eines sicheren Stands der Werkzeugmaschine umfasst, wobei die Vorrichtungen ein elastisches Material umfassen und an Laschen des Schutzbleches montierbar oder vormontierbar sind. Tests haben gezeigt, dass die beschriebenen Nachteile herkömmlicher Standfüße durch Bereitstellung von vormontierbaren Vorrichtungen zur Unterstützung eines sicheren Stands der Werkzeugmaschine minimiert werden können. Dies wird insbesondere dadurch erreicht, dass die Vorrichtungen über das Schutzblech an der Werkzeugmaschine befestigt werden können. Damit entfallen sowohl die Befestigungsschrauben, als auch die Unterlegscheiben für die Befestigung der Vorrichtungen. Außerdem kann vorteilhafterweise der separate Montageschritt der Befestigung der Vorrichtungen entfallen.

Bei der Werkzeugmaschine kann es sich insbesondere um einen Trennschleifer handeln, mit dem beispielsweise auch Stahl geschnitten werden kann. Ein solcher Trennschleifer verfügt vorzugsweise über eine scheibenförmige Trennscheibe, die im Kontext der vorliegenden Erfindung als Werkzeug des Trennschleifers oder der Werkzeugmaschine bezeichnet wird. Die Trennscheibe bzw. das Werkzeug werden bei Trennschleifern üblicherweise von einer Schutzhaube umgeben, um den Anwender vor Späne und spritzender Kühlflüssigkeit zu schützen.

Es ist bevorzugt, dass die "Vorrichtungen zur Unterstützung eines sicheren Stands der Werkzeugmaschine» im Kontext der vorliegenden Erfindung auch als "Standfüße" oder "Gummifüße" bezeichnet werden. Insbesondere kann das elastische Material, aus dem die Standfüße bestehen, Gummi sein. Es ist im Sinne der Erfindung bevorzugt, dass das elastische Material ausgewählt ist aus einer Gruppe umfassend Hydrierter Acrylnitrilbutadien-Kautschuk (HNBR), Nitrilkautschuk (NBR) und/oder Fluorkautschuk (FKM). Diese Materialen weisen vorteilhafterweise eine hohe UV-Beständigkeit und eine gute thermische Beständigkeit auf. Darüber hinaus haben sich die Materialien als besonders witterungsbeständig gezeigt, so dass sie gut im Freien, zum Beispiel auf einer Baustelle, eingesetzt werden können.

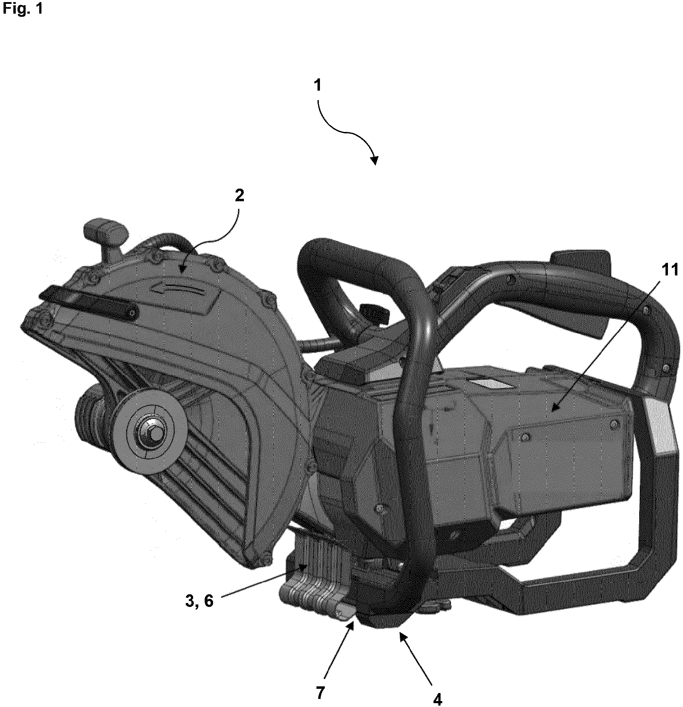

Das Material HNBR ist besonders geeignet für die Herstellung der Standfüße, da es eine gute Temperaturbeständigkeit von bis zu 150 °C aufweist. Dies ist wichtig, da beim Stahlschneiden Funken entstehen können, die mit Hilfe des Schutzbleches vom Gerät abgehalten werden sollen. Allerdings können die Funken eine Erhitzung des Schutzblechs bewirken, so dass es im Kontext der vorliegenden Erfindung bevorzugt ist, für die Standfüße ein möglichst hitzebeständiges Material zu verwenden. Darüber hinaus zeichnet sich HNBR durch eine besonders gute Witterungsbeständigkeit aus. Ferner weist NHBR eine sehr gute Abriebfestigkeit auf. Des Weiteren stellt HNBR eine kostengünstige Produktionslösung für die Standfüße dar. Das Schutzblech der Werkzeugmaschine weist Laschen auf, wobei die Standfüße an den Laschen des Schutzbleches vormontiert werden können. Ein vorderer Abschnitt des Schutzbleches liegt üblicherweise auf einer dem Werkzeug zugewandten Seite des Gehäuses der Werkzeugmaschine vor, um empfindliche oder brennbare Teile der Werkzeugmaschine oder seines Gehäuses vor herumfliegenden Funken, die beim Schneiden von Stahl entstehen können, zu schützen. Eine mögliche Anbringung eines Schutzbleches wird in Fig. 1 dargestellt. Es ist im Sinne der Erfindung insbesondere bevorzugt, das Schutzblech in räumlicher Nähe zu einem vorderen Handgriff des Trennschleifers vorzusehen.

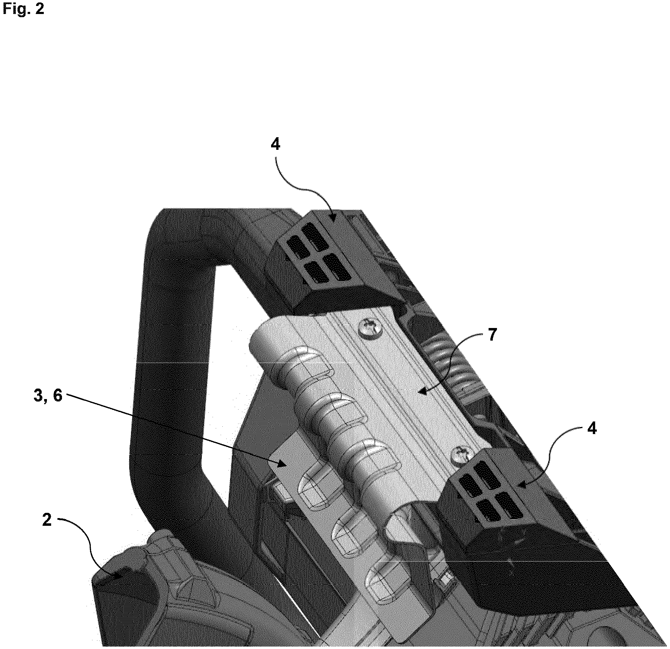

Es ist im Sinne der Erfindung bevorzugt, dass der vordere Handgriff als umlaufender Handgriff ausgebildet ist. Der Begriff «umlaufend» stellt für den Fachmann keinen unklaren Begriff dar, weil der Fachmann weiß, dass vordere Handgriffe im Bereich der Werkzeugmaschinen üblicherweise um das Gehäuse oder den Hauptkörper des Geräts herum verlaufen. Mit anderen Worten umschließen solche vorderen Handgriffe Gehäuse oder den Hauptkörper der Werkzeugmaschine zumindest teilweise, wodurch zum einen eine stabile Führung der Werkzeugmaschine durch den Nutzer ermöglicht wird. Zum anderen wird die Maschine durch den bevorzugt umlaufenden vorderen Handgriff wirksam vor mechanischen Beschädigungen geschützt, beispielsweise gegenüber Stößen oder beim Fallen. Es ist im Sinne der Erfindung bevorzugt, dass ein unterer Abschnitt des Schutzbleches mit den Standfüßen im Bereich einer Unterseite des vorderen Handgriffs angeordnet vorliegt, wobei diese Unterseite vorzugsweise zusammenfällt mit einer Unterseite des Gehäuses bzw. des Hauptkörpers der Werkzeugmaschine. Eine mögliche Anbringung eines Schutzbleches an der Werkzeugmaschine wird in Fig. 2 dargestellt. Es ist im Sinne der Erfindung bevorzugt, dass die Laschen zumindest teilweise den unteren Abschnitt des Schutzbleches bilden. Dadurch liegen die Standfüße, die auf die Laschen des Schutzbleches geschoben werden können, im montierten Zustand der Baugruppe aus Schutzblech und Standfüßen vorteilhafterweise auf der Unterseite des Gehäuses bzw. des Hauptkörpers der Werkzeugmaschine vor, so dass sie einen sicheren und stabilen Stand der Werkzeugmaschine gewährleisten können.

Der vordere Handgriff wird bei Rechtshändern üblicherweise von der linken Hand umschlossen. Insbesondere größere Maschinen weisen häufig einen zweiten Handgriff auf, der im Sinne der Erfindung als hinterer Handgriff bezeichnet wird. Der hintere Handgriff wird bei Rechtshändern üblicherweise von der rechten Hand umschlossen. Er kann vorzugsweise als C- oder D-förmiger Griff ausgebildet sein. Es ist im Sinne der Erfindung bevorzugt, dass die Werkzeugmaschine sowohl einen ersten, vorderen Handgriff, als auch einen zweiten, hinteren Handgriff umfasst. Vorzugsweise umfasst der hintere Handgriff Betätigungsmittel für die Werkzeugmaschine, um die Werkzeugmaschine beispielsweise ein- oder auszuschalten oder Betriebsparameter zu ändern.

Die Laschen des Schutzbleches können seitlich an dem Schutzblech angeordnet vorliegen, um die Montage der Standfüße an die Werkzeugmaschine zu erleichtern. Die Laschen werden daher bevorzugt auch als seitliche Laschen bezeichnet. Es ist im Sinne der Erfindung bevorzugt, dass die Standfüße an dem Schutzblech vormontiert werden können, wodurch eine Baugruppe gebildet wird, die in einem Arbeitsschritt an der Werkzeugmaschine befestigt werden kann. Dadurch kann die Anbringung der Standfüße an die Werkzeugmaschine wesentlich erleichtert werden. Die Baugruppe stellt einen zweiten Aspekt der vorliegenden Erfindung dar und kann im Kontext der Erfindung vorzugsweise auch als Vormontagebaugruppe bezeichnet werden.

Um die Montage der Standfüße an dem Schutzblech bzw. an seinen vorzugsweise seitlichen Laschen zu erleichtern, können die Standfüße Schlitze umfassen, in die die Laschen des Schutzblechs eingeführt werden können. Mit anderen Worten können die Vorrichtungen zur Unterstützung des sicheren Stands der Werkzeugmaschine Schlitze zur Aufnahme der Laschen des Schutzbleches aufweisen, wobei die Standfüße seitlich auf die Laschen des Schutzbleches geschoben werden können. Um nach der Vormontage eine optimale Lage der Standfüße in Relation zum Schutzblech zu gewährleisten, ist es vorteilhaft, einen definierten Endanschlag für die Standfüße am Schutzblech vorzusehen.

Die Laschen können für einen besseren Halt der vormontieren Standfüße mit einer Sicke versehen sein, so dass durch ein Untermaß der Schlitzbreite am Standfuß eine Vorspannung aufgebracht werden kann. Die seitliche Fixierung der Standfüße erfolgt vorzugsweise durch eine erhabene und umlaufende Gegenkontur am Gehäuseteil. Dies kann durch eine am Rand umlaufende und den Standfuß umfassende höheren Rippe am Gehäuse der Werkzeugmaschine geschehen. Der Standfuß wird dadurch in beiden Raumrichtungen sicher und stabil am Gehäuse der Werkzeugmaschine gehalten. Es ist mit anderen Worten im Sinne der Erfindung bevorzugt, dass die Werkzeugmaschine eine erhabene Gegenkontur zur Befestigung der Standfüße an dem Schutzblech aufweist. Darüber hinaus umfasst die Werkzeugmaschine ein Gehäuse, wobei die Gegenkontur zur Befestigung der Standfüße von einer umlaufenden erhöhten Wandung am Gehäuse der Werkzeugmaschine gebildet wird.

Somit gibt es für die montierten Standfüße keine freie Beweglichkeit in Relation zum Gerätegehäuse und die Standfüße sind in besonderer Weise dazu in der Lage, einen sicheren und stabilen Stand der Werkzeugmaschine auf einem Untergrund zu gewährleisten.

Wesentliche Vorteile der Erfindung bestehen darin, dass die Standfüße durch eine relativ große Pressfläche am Gehäuse der Werkzeugmaschine fixiert werden können. Die große Auflagefläche der Standfüße auf einem Untergrund wird vorzugsweise auch durch die konkrete räumliche Gestalt der Standfüße begünstigt. Bevorzugte Ausführungsformen der Standfüße sind in den Figuren dargestellt. Besonders bevorzugt ist eine Ausgestaltung der Standfüße mit einer trapezförmigen Grundfläche. Aufgrund der vergleichsweise großen Auflagefläche kann das Risiko einer Rissbildung im Material des Standfußes erheblich verringert werden, so dass die bereitgestellten Gummi-Standfüße für die Werkzeugmaschine besonders robust und langlebig sind. Insbesondere kann durch die Erfindung auf die Verwendung von zusätzlichen Befestigungsschrauben und Unterlegelementen für die Befestigung der Standfüße verzichtet werden. Ferner kann der Montageschritt zur Befestigung der Standfüße am Gehäuse der Werkzeugmaschine entfallen, da dieser vorteilhafterweise durch die Montage der Vormontagebaugruppe aus Schutzblech und Standfüßen erledigt wird.

Es ist im Sinne der Erfindung bevorzugt, dass das Schutzblech eine L-Form mit einem vorderen Abschnitt und einem unteren Abschnitt aufweist. Es kann darüber hinaus bevorzugt sein, dass der vordere Abschnitt und der untere Abschnitt einen Winkel miteinander einschließen, der in einem Bereich von 70 bis 110 Grad liegt, bevorzugt zwischen 80 und 100 Grad und am meisten bevorzugt zwischen 85 und 95 Grad. Der Bereich zwischen dem vorderen und dem unteren Abschnitt des Schutzbleches wird von einer Rundung des Materials gebildet. Mit anderen Worten kann ein Übergang zwischen dem vorderen Abschnitt und dem unteren Abschnitt des Schutzbleches als Kreisbogenfläche ausgestaltet sein, wobei die Kreisbogenfläche als Abrollfläche verwendet werden kann. Es ist im Sinne der Erfindung bevorzugt, dass der Übergang zwischen dem vorderen und dem unteren Abschnitt des Schutzbleches als großzügige Kreisbogenfläche ausgestaltet ist, die beispielsweise einen Winkel von 70 bis 110 Grad einschließt, vorzugsweise 80 und 100 Grad und am meisten bevorzugt einen Winkelbereich von 85 und 95 Grad. Vorzugsweise korrespondiert der Winkel, der von der Kreisbogenfläche eingeschlossen wird, mit dem Winkel, der von dem vorderen Abschnitt und einem unteren Abschnitt des Schutzbleches eingeschlossen wird. Die Kreisbogenfläche kann bei der Arbeit mit der Werkzeugmaschine vorteilhafterweise zum einen als Abrollfläche auf dem Untergrund beim Eintauchen der Schneidscheibe dienen, zum anderen als Schürfkante beim eigentlichen Schneidprozess.

Es ist im Sinne der Erfindung bevorzugt, dass der vordere Bereich des Schutzbleches auf einer Vorderseite des Gehäuses bzw. des Hauptkörpers der Werkzeugmaschine angeordnet ist, wenn das Schutzblecht bzw. die Baugruppe an der Werkzeugmaschine befestigt vorliegt. Es ist im Sinne der Erfindung darüber hinaus bevorzugt, dass der untere Bereich des Schutzbleches auf einer Unterseite des Gehäuses bzw. des Hauptkörpers der Werkzeugmaschine angeordnet ist, wenn das Schutzblecht bzw. die Baugruppe an der Werkzeugmaschine befestigt vorliegt. Die entsprechende Anordnung im an der Werkzeugmaschine montierten Zustand ist in den Fig. 1 und 2 zu sehen. Durch die bevorzugt L-förmige Ausgestaltung des Schutzbleches wird eine stabile Anbringung des Schutzbleches bzw. der Baugruppe an der Werkzeugmaschine ermöglicht. Ferner können die innenliegenden, empfindlichen Komponenten der Werkzeugmaschine, die vorzugsweise in deren Hauptkörper vorliegen, durch die bevorzugt L-förmige Ausgestaltung des Schutzbleches optimal gegenüber herumfliegenden Funken, wie sie beim Schneiden von Stahl entstehen können, geschützt werden.

Es ist im Sinne der Erfindung bevorzugt, dass der untere Abschnitt des Schutzbleches mindestens eine Sicke zur Erhöhung der Biegesteifigkeit des Schutzbleches aufweist. Die Sicke dient vorteilhafterweise zur Verbesserung der Biegesteifigkeit des unteren Abschnitts des Schutzbleches, insbesondere im Bereich der Laschen, auf die die Standfüße geschoben werden. Darüber hinaus dient die mindestens eine Sicke zur Erhöhung der Vorspannung an den Standfüßen, damit die Standfüße nach der Vormontage nicht von den Laschen herunterfallen.

Darüber hinaus kann auch der vordere Abschnitt des Schutzbleches mindestens eine Sicke zur Erhöhung der Biegesteifigkeit des Schutzbleches aufweist. Es ist im Sinne der Erfindung besonders bevorzugt, dass der vordere Abschnitt des Schutzbleches drei Sicken zur Verbesserung der Biegesteifigkeit des Schutzbleches aufweist. Diese drei Sicken sind in den Figuren dargestellt.

Es ist im Sinne der Erfindung bevorzugt, dass die Standfüße eine im Wesentlichen trapezförmige Grundfläche aufweisen. Mögliche konkrete Formgebungen für die Standfüße sind beispielsweise in den Figuren dargestellt. Die Verwendung von Standfüßen, die vorzugsweise symmetrisch zu ihrer Mittelachse ausgebildet sind, ermöglicht den Einsatz von Gleichteilen, wodurch die Produktion und die Verarbeitung der Standfüße vereinfacht werden kann.

Es ist im Sinne der Erfindung besonders bevorzugt, dass die Werkzeugmaschine zwei Standfüße aufweist, wobei je ein Standfuß auf eine Seite der Lasche des Schutzbleches geschoben werden kann. Dadurch kann vorteilhafterweise eine gute Standfestigkeit der Werkzeugmaschine, wenn sie auf den Standfüßen abgestellt wird, erreicht werden.

In einem weiteren Aspekt betrifft die Erfindung eine Baugruppe zur schnellen Montage eines Schutzbleches und von Standfüßen an eine Werkzeugmaschine. Die Baugruppe umfasst ein Schutzblech und Standfüße, wobei die Standfüße ein elastisches Material umfassen und an den Laschen des Schutzbleches (vor-)montiert werden können. Die Baugruppe stellt vorteilhafterweise ein separates Bauteil dar, das auch einzeln verkauft werden kann. Die Baugruppe kann in dem Sinne vormontiert sein, dass die Standfüße an den Laschen des Schutzbleches befestigt werden und diese Einheit dann als separate Baugruppe an der Werkzeugmaschine befestigt werden kann.

In einem weiteren Aspekt betrifft die Erfindung ein Verfahren zur schnellen Montage eines Schutzbleches und von Standfüßen an eine Werkzeugmaschine. Die für die Werkzeugmaschine und die Baugruppe eingeführten Begriffe, Definitionen und technischen Vorteile gelten vorzugsweise für das Montageverfahren analog. Das Montageverfahren ist durch folgende Verfahrensschritte gekennzeichnet:
a) Bereitstellung einer Werkzeugmaschine,
b) Bereitstellung einer Baugruppe umfassend ein Schutzblech und Vorrichtungen zur Unterstützung eines sicheren Stands der Werkzeugmaschine, wobei die Vorrichtungen ein elastisches Material umfassen und an Laschen des Schutzbleches vormontiert vorliegen,
c) Montage der Baugruppe an die Werkzeugmaschine.

Ein wesentlicher Vorteil der Erfindung besteht darin, dass die Montage der Standfüße an die Werkzeugmaschine durch die Vormontage der Standfüße an das Schutzblech erheblich vereinfacht und schneller gemacht werden kann. Es ist im Sinne der Erfindung bevorzugt, dass durch diese Vormontage die vorgeschlagene Baugruppe erhalten werden kann, die insbesondere das Schutzblech, sowie die Standfüße umfasst, und die dazu eingerichtet ist, an der Werkzeugmaschine befestigt zu werden. Es ist im Sinne der Erfindung besonders bevorzugt, dass die vormontierte Baugruppe an eine Unter- und eine Vorderseite des Hauptkörpers der Werkzeugmaschine montiert werden kann. Dabei wird ein vorderer Abschnitt des Schutzbleches vorzugsweise an der Vorderseite der Werkzeugmaschine montiert, wobei diese Vorderseite dem Werkzeug der Werkzeugmaschine zugewandt ist, während ein unterer Abschnitt des Schutzbleches, an dem im vormontierten Zustand auch die Standfüße angeordnet vorliegen, an eine Unterseite der Werkzeugmaschine montiert wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung der vorgeschlagenen Werkzeugmaschine
- Fig. 2: Ansicht einer bevorzugten Ausgestaltung einer Unterseite der vorgeschlagenen Werkzeugmaschine
- Fig. 3: Ansicht einer bevorzugten Ausgestaltung des Schutzbleches mit und ohne Standfüßen
- Fig. 4: Ansicht einer bevorzugten Ausgestaltung der Standfüße
- Fig. 5: Ansicht einer bevorzugten Ausgestaltung der Baugruppe
- Fig. 6: Ansicht einer bevorzugten Ausgestaltung der Gegenkontur am Gehäuse der Werkzeugmaschine
- Fig. 7: Ansicht einer bevorzugten Ausgestaltung der Standfüße
- Fig. 8: Ansicht einer bevorzugten Ausgestaltung der Baugruppe

### Ausführungsbeispiele und Figurenbeschreibung:

Figur 1 zeigt eine bevorzugte Ausgestaltung der vorgeschlagenen Werkzeugmaschine 1. Die in Fig. 1 dargestellte Werkzeugmaschine 1 weist einen vorderen, umlaufenden Handgriff, sowie einen hinteren Handgriff auf. Die Handgriffe umschließen einen Hauptkörper der Werkzeugmaschine 1, der von einem Gehäuse 11 umgeben ist. Ferner weist die Werkzeugmaschine 1 ein Werkzeug 2 auf, wobei in Fig. 1 stellvertretend die Schutzhaube des Werkzeugs 2 mit dem Bezugszeichen 2 bezeichnet wird. Die in Fig. 1 dargestellte Werkzeugmaschine 1 stellt einen Trennschleifer dar, der vorzugsweise dazu eingerichtet ist, Schnitte in harte Materialien, wie Beton und Stahl, einzubringen. Das Werkzeug 2 eines solchen Trennschleifers 1 ist üblicherweise scheibenförmig ausgebildet und wird als Trennscheibe bezeichnet.

Der vordere umlaufende Handgriff und der hintere Handgriff der Werkzeugmaschine 1 legen vorzugsweise die Raumrichtungen «vorne» und «hinten», sowie «Vorderseite» und «Rückseite» fest. Es ist im Sinne der Erfindung bevorzugt, dass der Hauptkörper der Werkzeugmaschine 1 eine Vorderseite aufweist, die im Bereich des vorderen umlaufenden Handgriffs der Werkzeugmaschine 1 angeordnet ist. Diese Vorderseite des Hauptkörpers der Werkzeugmaschine 1 ist vorzugsweise so angeordnet, dass sie dem Werkzeug 2 der Werkzeugmaschine 1 zugewandt ist. Im unteren Bereich dieses Hauptkörpers der Werkzeugmaschine 1 liegt die vormontierte Baugruppe 10 vor, die insbesondere ein Schutzblech 3 und Standfüße 4 umfasst. Die Vormontage der Baugruppe 10 besteht darin, dass die Standfüße 4 auf Laschen 5 des Schutzblechs 3 geschoben werden, so dass sie von dem Schutzblech 3 gehalten werden. Die Standfüße 4 können zu diesem Zwecke Schlitze 8 aufweisen, die so ausgestaltet sind, dass sie die seitlichen Laschen 5 des Schutzbleches 3 aufnehmen können. Die vormontierte Baugruppe 10 aus Schutzblech 3 und Standfüßen 4 kann besonders einfach und unkompliziert an der Werkzeugmaschine 1 befestigt werden. Die Standfüße 4 sind aus einem elastischen Material, wie Gummi, hergestellt oder umfassen ein solches elastischen Material. Aufgrund der Elastizität des Materials der Standfüße 4 weist die Werkzeugmaschine 1, die mit der Baugruppe 10 versehen ist, einen sicheren und stabilen Stand auf und kann besonders rutschfest auf einem Untergrund abgelegt werden.

Das Schutzblech 3 weist eine L-Form mit einem vorderen Abschnitt 6 und einem unteren Abschnitt 7 auf, wobei der vordere Abschnitt 6 und der untere Abschnitt 7 des Schutzbleches 3 einen im Wesentlichen rechten Winkel miteinander einschließen. Dieser Winkel kann beispielsweise bei 85 Grad, 90 Grad oder 93 Grad liegen. Es ist im Sinne der Erfindung bevorzugt, dass der vordere Abschnitt 6 des Schutzbleches 3 im montierten Zustand an der Vorderseite des Hauptkörpers der Werkzeugmaschine 1 angeordnet vorliegt, während der untere Abschnitt 7 des Schutzbleches 3 im montierten Zustand an einer Unterseite der Werkzeugmaschine 1 angeordnet vorliegt.

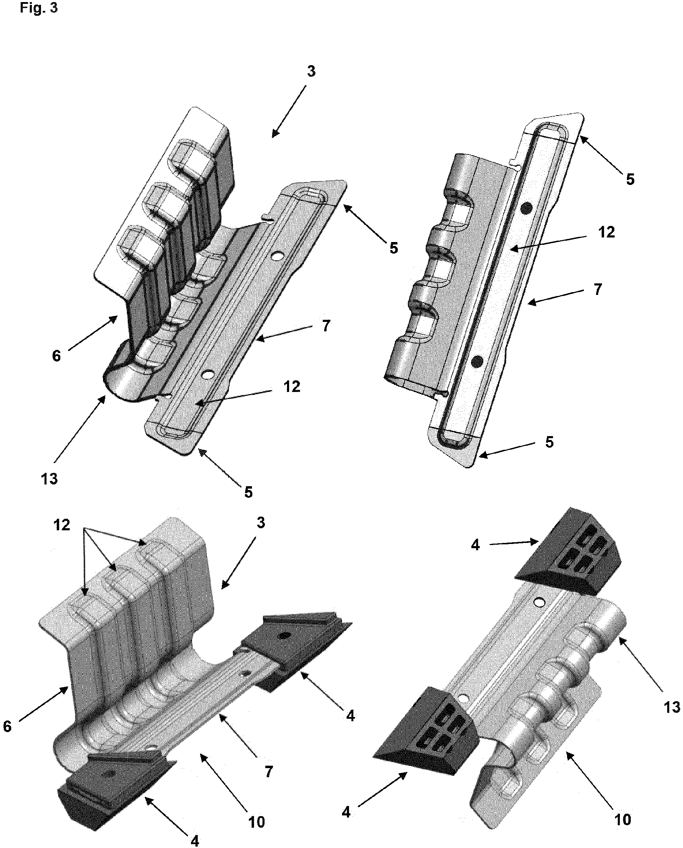

Fig. 2 zeigt eine bevorzugte Ausgestaltung der Unterseite der vorgeschlagenen Werkzeugmaschine 1. Zu sehen ist insbesondere der untere Abschnitt 7 des Schutzbleches 3, wobei es insbesondere dieser untere Abschnitt 7 des Schutzbleches 3 ist, an dem die Laschen 5 zur Befestigung der Standfüße 4 angeordnet vorliegen. Dies wird insbesondere auch in Fig. 3 dargestellt. In Fig. 2 wird darüber hinaus gezeigt, dass das Schutzblech 3 mit zwei Befestigungsschrauben an der Werkzeugmaschine 1 bzw. seinem Gehäuse 11 befestigt werden kann. Im linken, unteren Bereich von Fig. 2 ist das Werkzeug 2 der Werkzeugmaschine 1 bzw. seine Schutzhaube zu sehen.

Fig. 3 zeigt eine bevorzugte Ausgestaltung des Schutzbleches 3 mit Standfüßen 4 (unten) und ohne Standfüße 4 (oben). Der obere Teil von Fig. 3 zeigt das Schutzblech 3 mit seinen Bestandteilen vorderer Abschnitt 6, unterer Abschnitt 7 und den Laschen 5, die sich bevorzugt am unteren Abschnitt 7 des Schutzbleches 3 befinden, und zwar vorzugsweise an den Seiten des unteren Abschnitts 7. Insbesondere zeigt der obere Teil von Fig. 3 das Schutzblech 3 mit den seitlichen Laschen 5 zur Befestigung der Standfüße 4. Der untere Teil von Fig. 3 zeigt die fertig vormontierte Baugruppe 10, wobei dabei die Standfüße 4 bereits an den Laschen 5 des Schutzbleches 3 befestigt sind. Die Standfüße 4 können Schlitze 8 aufweisen, mit denen die Standfüße 4 über die Laschen 5 des unteren Abschnitts 7 des Schutzbleches 3 geschoben werden können. Somit zeigt Fig. 3 die Vormontierung der Standfüße 4 durch ein Aufschieben der Standfüße 4 auf die Laschen 5 des Schutzbleches 3. Auf diese Weise wird die vormontierte Baugruppe 10 erhalten.

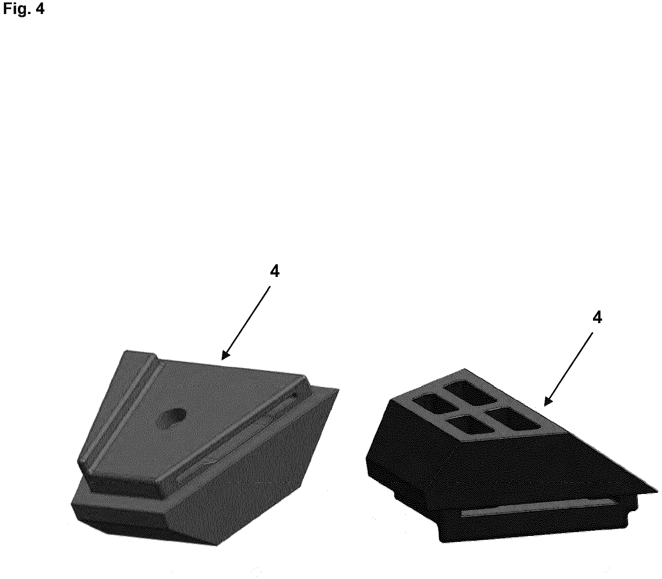

Fig. 4 zeigt eine bevorzugte Ausgestaltung der Standfüße 4 mit ihren Schlitzen 8, in die die Laschen 5 des Schutzbleches 3 eingeführt werden können.

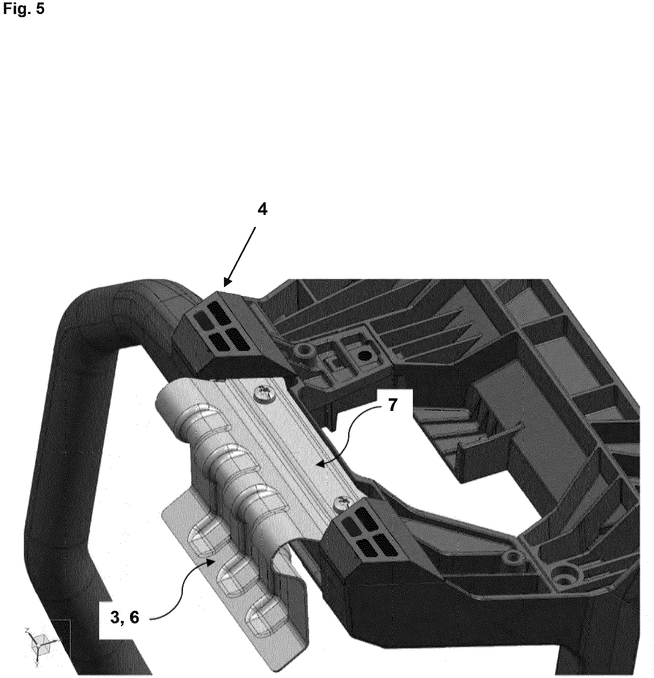

Fig. 5 zeigt eine bevorzugte Ausgestaltung der Baugruppe 10 im montierten Zustand an der Werkzeugmaschine 1. Zu sehen sind das Schutzblech 3 bzw. der vordere Abschnitt 6 und der untere Abschnitt 7 des Schutzbleches 3, sowie die Standfüße 4. Insbesondere gewährt Fig. 5 einen Blick auf eine bevorzugte Ausgestaltung der Unterseite der vorgeschlagenen Werkzeugmaschine 1.

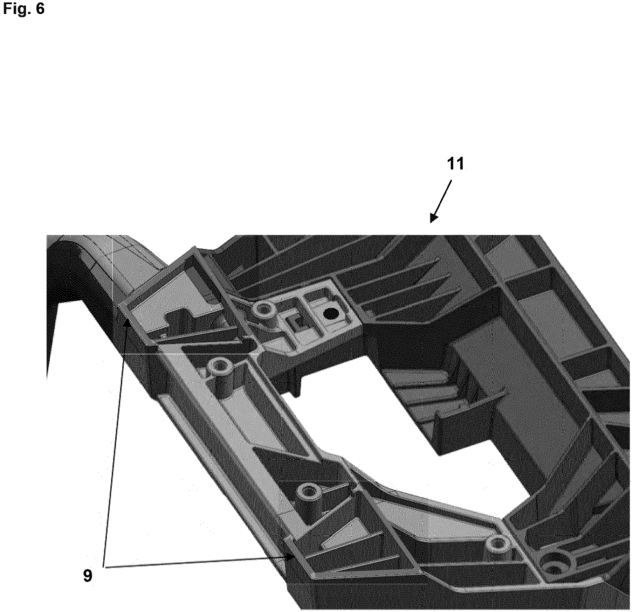

Fig. 6 zeigt eine bevorzugte Ausgestaltung der Gegenkontur 9 am Gehäuse 11 der Werkzeugmaschine 1. Vorzugsweise liegt die Gegenkontur 9 auf der Unterseite der Werkzeugmaschine 1 vor. Es ist im Sinne der Erfindung bevorzugt, dass die Gegenkontur 9 erhaben ausgebildet ist und zur Befestigung des Schutzbleches 3 der Werkzeugmaschine 1 eingerichtet ist. Es ist im Sinne der Erfindung ganz besonders bevorzugt, dass die Gegenkontur 9 von einer umlaufenden erhabenen Wandung am Gehäuses 11 der Werkzeugmaschine 1 gebildet wird. Diese Wandung stellt vorteilhafterweise die seitliche Führung des Standfußes 4 im Gehäuse 11 sicher.

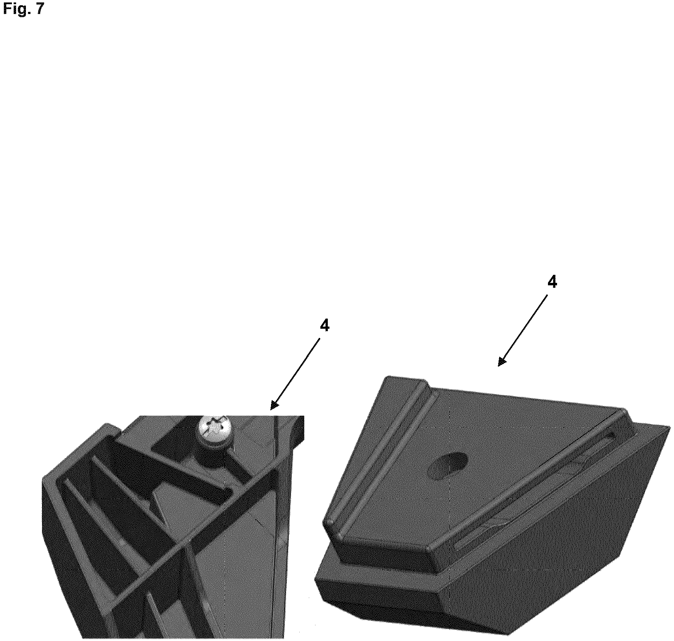

Fig. 7 zeigt eine bevorzugte Ausgestaltung der Standfüße 4, mit denen ein besonders sicherer und stabiler Stand der Werkzeugmaschine 1 erreicht werden kann. Ferner kann durch die Standfüße 4 die Rutschfestigkeit der Werkzeugmaschine 1 wesentlich verbessert werden. Ein wesentlicher Vorteil der Erfindung besteht darin, dass die Montage der Standfüße 4 an die Werkzeugmaschine 1 durch die Vormontierung der Standfüße 4 an das Schutzblech 3 erheblich vereinfacht und schneller gemacht werden kann, wobei durch die Vormontierung von Standfüßen 4 und Schutzblech 3 die vorgeschlagene Baugruppe 10 erhalten werden kann.

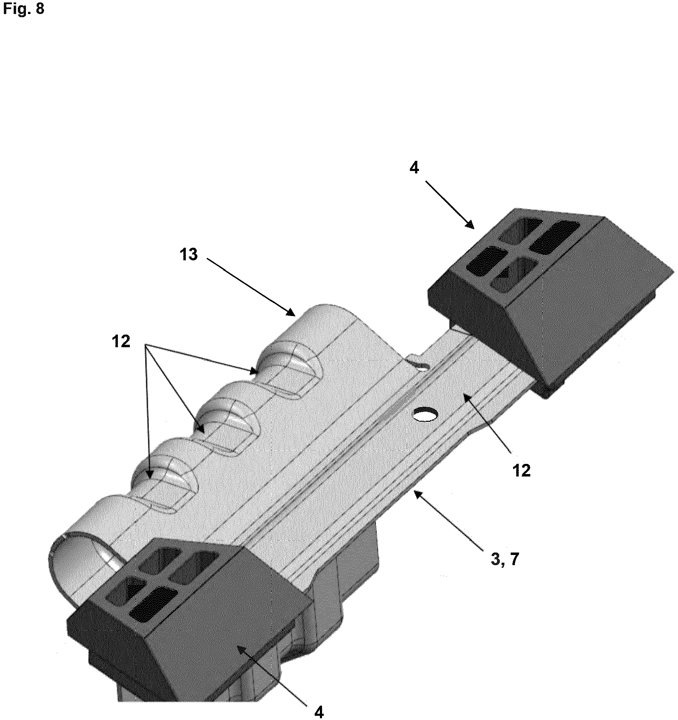

Fig. 8 zeigt eine bevorzugte Ausgestaltung der Baugruppe 10 im nicht-montierten Zustand an der Werkzeugmaschine 1. Die Baugruppe 10, die in Fig. 8 dargestellt ist, ist in dem Sinne vormontiert, dass die Standfüße 4 an den seitlichen Laschen 5 des Schutzbleches 3 montiert vorliegen. Die auf diese Weise erhaltene Baugruppe 10 liegt allerdings nicht an der Werkzeugmaschine 1 montiert vor, weswegen der entsprechende Zustand als «nicht-montiert» bezeichnet wird.

### Bezugszeichenliste

- 1: Werkzeugmaschine
- 2: Werkzeug
- 3: Schutzblech
- 4: Standfüße
- 5: Laschen des Schutzbleches
- 6: Vorderer Abschnitt des Schutzbleches
- 7: Unterer Abschnitt des Schutzbleches
- 8: Schlitze zur Aufnahme der Laschen des Schutzbleches
- 9: Gegenkontur zur Befestigung der Standfüße
- 10: Baugruppe
- 11: Gehäuse
- 12: Sicken
- 13: Kreisbogenfläche

## Patentansprüche

1. Werkzeugmaschine (1) mit einem scheibenförmigen Werkzeug (2) und einem Schutzblech (3), um die Werkzeugmaschine (1) vor einem Funkenflug zu schützen,
**dadurch gekennzeichnet, dass**
das Schutzblech (3) Vorrichtungen (4) zur Unterstützung eines sicheren Stands der Werkzeugmaschine (1) umfasst, wobei die Vorrichtungen (4) ein elastisches Material umfassen und an Laschen (5) des Schutzbleches (3) montierbar sind.

2. Werkzeugmaschine (1) nach Anspruch 1
**dadurch gekennzeichnet, dass**
das Schutzblech (3) eine L-Form mit einem vorderen Abschnitt (6) und einem unteren Abschnitt (7) aufweist.

3. Werkzeugmaschine (1) nach Anspruch 2
**dadurch gekennzeichnet, dass**
die Laschen (5) Bestandteil des unteren Abschnitts (7) des Schutzbleches (3) sind.

4. Werkzeugmaschine (1) nach einem der Ansprüche 2 oder 3
**dadurch gekennzeichnet, dass**
der untere Abschnitt (7) des Schutzbleches (3) mindestens eine Sicke (12) zur Erhöhung der Biegesteifigkeit des Schutzbleches (3) aufweist.

5. Werkzeugmaschine (1) nach einem der Ansprüche 2 bis 4
**dadurch gekennzeichnet, dass**
der vordere Abschnitt (6) des Schutzbleches (3) mindestens eine Sicke (12), vorzugsweise drei Sicken (12), zur Erhöhung der Biegesteifigkeit des Schutzbleches (3) aufweist.

6. Werkzeugmaschine (1) nach einem der Ansprüche 2 bis 5
**dadurch gekennzeichnet, dass**
ein Übergang zwischen dem vorderen Abschnitt (6) und dem unteren Abschnitt (7) des Schutzbleches (3) als Kreisbogenfläche (13) ausgestaltet ist, wobei die Kreisbogenfläche (13) als Abrollfläche verwendbar ist.

7. Werkzeugmaschine (1) nach einem der vorhergehenden Ansprüche
**dadurch gekennzeichnet, dass**
die Vorrichtungen (4) zur Unterstützung des sicheren Stands der Werkzeugmaschine (1) seitlich auf die Laschen (5) des Schutzbleches (3) schiebbar sind.

8. Werkzeugmaschine (1) nach einem der vorhergehenden Ansprüche
**dadurch gekennzeichnet, dass**
die Vorrichtungen (4) zur Unterstützung des sicheren Stands der Werkzeugmaschine (1) eine im Wesentlichen trapezförmige Grundfläche aufweisen.

9. Werkzeugmaschine (1) nach einem der vorhergehenden Ansprüche
**dadurch gekennzeichnet, dass**
die Vorrichtungen (4) zur Unterstützung des sicheren Stands der Werkzeugmaschine (1) Schlitze (8) zur Aufnahme der Laschen des Schutzbleches aufweisen.

10. Werkzeugmaschine (1) nach einem der vorhergehenden Ansprüche
**dadurch gekennzeichnet, dass**
die Werkzeugmaschine (1) eine erhabene Gegenkontur (9) zur Befestigung der Vorrichtungen (4) zur Unterstützung des sicheren Stands der Werkzeugmaschine (1) an dem Schutzblech (3) aufweist.

11. Werkzeugmaschine (1) nach Anspruch 10
**dadurch gekennzeichnet, dass**
die Werkzeugmaschine (1) ein Gehäuse (11) umfasst, wobei die Gegenkontur (9) von einer umlaufenden erhöhten Wandung des Gehäuses (11) der Werkzeugmaschine (1) gebildet wird.

12. Werkzeugmaschine (1) nach einem der vorhergehenden Ansprüche
**dadurch gekennzeichnet, dass**
die Werkzeugmaschine (1) zwei Vorrichtungen (4) zur Unterstützung des sicheren Stands der Werkzeugmaschine (1) aufweist.

13. Baugruppe (10) zur schnellen Montage eines Schutzbleches (3) und Vorrichtungen (4) zur Unterstützung eines sicheren Stands einer Werkzeugmaschine (1) an eine Werkzeugmaschine (1)
**dadurch gekennzeichnet, dass**
die Baugruppe (10) ein Schutzblech (3) und Vorrichtungen (4) zur Unterstützung eines sicheren Stands der Werkzeugmaschine (1) umfasst, wobei die Vorrichtungen (4) ein elastisches Material umfassen und an Laschen (5) des Schutzbleches (3) montierbar sind.

14. Verfahren zur schnellen Montage eines Schutzbleches (3) und Vorrichtungen (4) zur Unterstützung eines sicheren Stands einer Werkzeugmaschine (1) an eine Werkzeugmaschine (1) **gekennzeichnet durch die folgenden Verfahrensschritte:**
a) Bereitstellung einer Werkzeugmaschine (1),
b) Bereitstellung einer Baugruppe (10) umfassend ein Schutzblech (3) und Vorrichtungen (4) zur Unterstützung eines sicheren Stands der Werkzeugmaschine (1), wobei die Vorrichtungen (4) ein elastisches Material umfassen und an Laschen (5) des Schutzbleches (3) vormontiert vorliegen.
c) Montage der Baugruppe (10) an die Werkzeugmaschine (1).
